# EUROPEAN PATENT SPECIFICATION

(11) **EP 1 112 459 B1**
(45) Date of publication and mention of the grant of the patent: **04.01.2012**
(21) Application number: 99929681.7
(22) Date of filing: 12.07.1999
(51) Int. Cl.: F21V 9/04, F21V 9/06, G02B 5/30, G01J 1/42

(54) **SOLAR BLIND UV VIEWING APPARATUS AND CAMERA**
GEGEN SONNENLICHT UNEMPFINDLICHES UV-AUFNAHMEGERÄT UND KAMERA
CAMERA ET APPAREIL DE PRISE DE VUE DE RAYONNEMENT ULTRAVIOLETS AVEUGLE A LA LUMIERE SOLAIRE

(30) Priority: 20.07.1998 IL 12541298
(43) Date of publication of application: 04.07.2001
(73) Proprietor: Ofil Ltd., Kiryat Weizman Science Park 74140 Nes Ziona (IL)
(72) Inventor: ELSTEIN, Shimon, 79411 Mercaz Shapira (IL); LINDNER, Malka, 69371 Tel Aviv (IL); LINDNER, Pinhas, 69371 Tel Aviv (IL)
(74) Representative: Modiano, Micaela Nadia
(86) International application number: PCT/IL1999/000381
(87) International publication number: WO 2000/005536

(56) References cited:
- EP-A- 0 651 233
- US-A- 5 107 333
- US-A- 5 148 023
- US-A- 5 574 286
- US-A- 5 719 567

## Description

### Field of the Invention

The present invention relates to means for detecting and viewing ultraviolet emittance sources. More particularly, the invention relates to bispectral means for viewing and displaying sources of ultraviolet (UV) with the visible image of their background.

### Background of the Invention

The imaging of UV emittance is advantageous for a wide range of uses, particularly where the UV is the only, or the most dominant, light emittance, like electrical discharges (corona) in high voltage lines, Cherenkov glow in nuclear safeguards and plasma.

In many applications such as detection of fire from long ranges where the UV emittance is not dominant, the imaging of the UV emittance may still provide significant advantage due to the low levels of clutter and background in the UV. The imaging of active UV sources can also be applied for tracking and identification purposes. The invention relates visualization of solar blind UV (hereinafter "SBUV") images and combining the SBUV images with the image of the visible scene. Therefore, it will be referred to as bispectral visible solar blind UV (hereinafter "VSBUV") imaging.

The Ultraviolet region is usually divided into three sections: UVc, from 200-280 nm; UVb, from 280-320 nm; and UVa, from 320-380 nm. When measuring in selected UV bands, efficiency of blocking the radiation in the remaining UV portions of the spectrum, and in the visible and infrared (hereinafter: "IR") spectral ranges, is crucial.

The so-called "solar blind", Solar Blind UV (SBUV range, in the UVc region is the range between 240 nm and 280 nm. In this range, due to the ozone layer in the stratosphere, solar radiation is completely blocked and background radiation at the earth's surface is zero. This absence of background radiation can be utilized to detect an image at extremely weak levels of UV emittance. Even with SBUV irradiance of individual photons, the attainable signal to background ratio can be much better than in detection in other spectral regions. The solar blind range is utilized for detecting UV signals of flames and plumes (for example, in US Patent No. 5,021,668). This situation can also be utilized for early detection of forest fires, or for detection of fires in factories and industrial plants. It can further be utilized to detect artificial light sources, corona sparks, and Cherkenov emissions. Transmission of UV signals in short distance communications applications are also feasible, as described, e.g., in US Patent No. 4,731,881.

It is known that fuel and wood fires can be detected in full daylight by using solar blind photomultipliers with CsTe, RbTe or CsRbTe photocathodes equipped with solar blind filters [M. Lindner et al., "UV Devices for Solar Blind and Background Limited Detection", SPIE 3110, pp. 527-534, (1997)]. Thus, a fire detection system based on a solar blind photomultiplier can be a valuable safety and alarming system for protecting installations like hangars, fuel cisterns ranches, and fuel filling stations. However, when using a photomultiplier to measure radiation of a flame in the UVc "solar blind" region, sunlight leakage of even single photons into the detector can make the measurement unreliable. Therefore, the use of solar blind filter that transmits light only in the solar blind range is critical. UV detection in the solar blind range is particularly valuable for the detection of "unseen flames", which have low visible and IR emittance, but considerable UV emittance. These include flames from fuels like hydrogen, various alcohols and metallized fuels. Liquid hydrogen, used today in spacecraft, is considered as a future commercial fuel, and therefore, detection of H₂ flames will be of importance in the future. Fire alarm systems using imaging systems are also of advantage.

The early detection of electrical leakages can be of advantage to electrical utilities in preventing transmission system failures. The detection of corona and partial discharges on insulators and other equipment in high voltage transmission systems is difficult. The phenomena of UV emittance from corona, which occurs already at the first stages of the leakage is well known and was studied in detail [F. Grum et al., "Spectral Emittance of Corona Discharges", Applied Optics Vol. 15, p. 76-79, (1976)]. The corona discharge emits UV radiation in the range of 200 - 430 nm. These discharges are invisible in full daylight. The UV-v radiation, namely the radiation at wavelength 380 - 430 nm, is visible during night time but night time inspection and operation of maintenance teams is not favored by the electrical utility companies. It should be noted that the use of the existing UV viewing and imaging devices are restricted to night time or evening time. In outdoor measurements under daylight conditions, sunlight leakage into the detector is much larger than the corona emission, making viewing impossible. Use of inspection helicopters flying at low altitude is precluded during night time and operation of maintenance groups at night time is restricted due to various technical difficulties and safety problems.

Detection of discharge corona with a photomultiplier equipped with a UV transmitting window was suggested already in 1973 [T.H. Teich "Locating Corona Points by Detection of their UV Emittance", Conference on Diagnostic Testing of High Voltage Systems No. 1215109, p 26-30 (1973)]. Detection of corona in full daylight can become feasible by use of a solar blind photomultiplier and a solar blind filter, as described in GB 2,278,435. Although the emittance of the corona discharges in the solar blind range (240 - 280 nm) is about two orders of magnitude lower than the emittance in the UVa range, due to the low clutter from the environment and the absence of solar radiation at the earth's surface in the solar blind band, detection limited to this band has the advantage of a much better signal-to-background ratio than in the UVa range. The feasibility of imaging of corona and gasoline fuel fire in full day light in the SBUV band was demonstrated [M. Lindner et al. "Solar Blind Bandpass Filters for UV Imaging Devices", SPIE 3302, page 176-183, (1988)].

Furthermore, a system including UV lamps and solar blind camera has already proven efficient in navigation applications in fog and rainy conditions, e.g., in USP 5,719,567. The present invention facilitates visual tracking of targets, for example, the tracking of a vehicle bearing a UV lamp. Fingerprints, stains such as blood, semen and saliva, or traces of oils and other materials which are invisible to the naked eye can be detected by illuminating them with ultraviolet light and imaging the reflected luminescence [for example, Gui Qiang W., "Detecting and Enhancing Latent Fingerprints with Short Wave UV Reflection Photography", Proc. of the Symposium on Fingerprint Detection and Identification, Neurim (Israel), June 1995, pgs. 37-49; E. Springer et al. "Detection of Dry Body Fluids by Inherent Short Wavelength UV luminescence: Preliminary results", Forensic Sci. Int. 66, pgs. 89-94 (1994)]

There are known some devices for viewing UV emittance, particularly for detecting corona related UV emittance. Some of these devices, by using a relatively wide band filter, acquire an image of the scene, including the corona UV emittance and the visible spectrum of the environment. Then, means are generally provided in these devices for increasing the contrast between the UV portion of the image and the visible background. However, the results of these devices are not satisfactory, as in daylight the corona emittance being very weak in intensity can hardly be detected, and on sunny days, corona detection is impossible by use of these devices. For example, a product known as "CoroCam" (W.L. Vosloo, G.R. Stopler and P. Baker, "Daylight Corona Discharge Observation and Recording System", 10th International Symposium on High Voltage Engineering, 1997) is a video camera for viewing corona emittance with the visual background. The camera, CoroCAM III, can function properly only in twilight, or during the night, and not on sunny days, particularly so when the camera is directed against the sunlight. This is particularly due to the use of a UV filter, which is not limited only to the solar blind range.

Another video camera, HC1000, manufactured by Duncan Technologies Inc., enables the visualization of invisible flames that are present in the scene. This camera, however, is limited to the detection of IR emittance, and does not detect UV emittance. Furthermore, although this camera superimposes IR view on the visible scene, this is done in a very complicated and not simple to operate manner, using three cameras: a first, color camera, a second camera acquiring a view filtered to include the flame IR band and IR background, and a third camera acquiring a view filtered to include non-flame IR background wavelengths. The three images are then processed and combined to provide a superimposed view of the scene and of the IR emittance.

A device called "The CoronaScope", manufactured by Forsyth Electro-Optics Inc., is sold for viewing corona discharges. However, this device can function only in the presence of low background light, including non-intense normal indoor lighting, or in outdoor twilight, or at dark. A patent was applied for the apparatus as described in CA 2211490. Claims were raised for using passband filters centered at the wavelength corresponding to one of the UV emission lines of nitrogen 315.9nm, 337.1nm, 353.7nm, 375.5nm and 380.5nm and for the lines 295.3, 296.2 and 297.7nm. No claim was raised on a passband in the solar blind region 240-280nm, which is the region in which the apparatus of the present invention is detecting. The Forsyth device cannot detect the corona in daylight using the passbands overlapping the nitrogen lines, as listed above, because the solar background far exceeds in intensity the emission of the corona in these passbands.

US 5,719,567 (Norris Victor J) discloses a system for enhancing navigation or surveillance in low visibility conditions which employs one or more ultraviolet radiation sources.

EP 651,233 discloses an ultraviolet spatial sensor and more particularly a wide-field-of-view photon counting sensor using a microchannel plate and a discrete anode array.

US 5,107,333 (Pouque ct. A1.) discloses a bispectral pick-up and false color display system which comprises a bispectral camera for analyzing a picture in the visible range and a picture in the infrared range, and outputting two respective video signals, one for the visible range and one for the infrared range.

It is therefore an object of the invention to provide an effective apparatus for displaying a bispectral image, viz., an image that combines the view of UV emittance in the solar blind spectral range, with the view of the visible background.

More particularly, it is an object of the invention to provide a still or video camera which provides a combined image of UV emittance in the solar blind spectrum, and of the visible background.

It is another object of the invention to provide a bispectral viewer which displays a simultaneous, combined view of a UV emittance in the solar blind spectrum, and of the view of the visible background.

It is still a further object of the invention to provide apparatus which is capable of detecting and displaying UV remittance existing together with strong artificial or daylight illumination, in other spectral ranges.

It is still another object of the invention to provide such apparatus in a compact form, which is simple to operate.

Other objects and purposes of the invention will become apparent as the description proceeds.

### Summary of the Invention

The invention relates to a method for detecting UV emittance in strongly lit environments, the method being defined by claim 1.

According to one embodiment of the invention the combination of the images is carried out by passive optical means allowing a viewer to visualize the combined image.

According to another embodiment of the invention the method further comprises the transferring of the combined image into electronic recording and/or displaying means for recording and/or displaying the combined image. The electronic recording and/or displaying means may be, for example, a videotape and a screen.

Preferably, according to a preferred embodiment of the invention the method further comprising first acquiring an image spanning at least the visible and solar blind UV spectra of the field of view, and then separating the spectrum of the acquired image, wherein the UV spectrum of the acquired image is transferred into the UV imaging unit, and the visible spectrum of the acquired image is transferred into the visible unit.

Preferably, according to a preferred embodiment of the invention, the imaging of the field of view is carried out separately by each one of the two imaging units.

Although the method of the invention is most advantageous in monitoring UV emittance in strongly lit environments, a task that essentially cannot be performed by prior art apparatuses, the method can of course be effectively used in environments that are not strongly lit.

The invention also relates to an apparatus for detecting UV emittance in strongly lit environments as claimed in claim 4.

According to one embodiment of the invention the image acquiring means comprises two image acquiring elements, a first element in the UV unit providing the first image of the field of view into the UV unit and a second element in the visible unit providing a second image of the field of view into the visible unit.

According to one embodiment of the invention the first and second elements are optical lenses. The solar blind ultraviolet optical filter can be positioned before the optical lens of the UV unit, after the optical lens of the UV unit, or incorporated within the optical lens of the UV unit.

The image acquiring means comprises a beamsplitter receiving optical beams from the field of view, and splitting the said received optical beams so that the beams spanning at least the visible spectrum are directed towards the visible unit, and the beams spanning the UV spectrum are directed towards the UV unit. The beamsplitter can be, for example, a dichroic beamsplitter.

Preferably, the UV unit further comprises a first lens receiving the radiation in the solar blind spectrum passing through the solar blind ultraviolet optical filter, and producing a solar blind UV image of the field of view. The UV image display means further comprises a UV image sensor located at the focal point of the first lens, said UV image sensor creates a visible image of the solar blind UV image of the field of view. The UV image sensor is, according to one embodiment of the invention a fluorescent screen. According to another embodiment of the invention the UV image sensor is a UV solar blind image intensifier. Alternatively, the UV image sensor can be selected from among CCD (Charged Coupled Device), BCCD (Back illuminated Charged Coupled Device), EBCCD (Electron Bombarded Charged Coupled Device), ICCD (Intensified Charged Coupled Device using intensifier), MCP-PMT (Microchannel Plate Photomultiplier) having multianode or other position sensitive anode output for producing first electronic signals describing the said UV image.

The combination of the visible image of the solar blind UV spectrum of the field of view and the visible image is carried out, according to a preferred embodiment of the invention by a beamsplitter simultaneously viewing the images, as provided by the UV and the visual units respectively.

In order to enable to electronically process the separate or the combined images, the visible image unit preferably also comprises an image sensor selected from among the CCD, CMOS (Complementary Metal Oxide Semiconductor), CID (Charged Induced Device) receiving the visible image, and producing second electronic signals describing said image.

According to still another embodiment of the invention, processing means are provided for combining the visible image of the solar blind UV spectrum of the field of view, and the visible spectrum image of the field of view. More particularly, processing methods known in the art can be selected for that purpose, such as, arithmetic mixing, non-arithmetic mixing, luminance keying or chroma keying for combining the first and second electronic signals produced by the UV and the visible units respectively.

Preferably, according to one embodiment of the invention the combined signal, either processed by the processing means or not, is provided to electronic recording and/or displaying means for recording and/or displaying the combined visual image. Such means may be, for example, a videotape and a screen, or a stills camera for recording the combined visual image on a stills camera film.

Alternatively, the apparatus according to the invention may be a viewer in a monocular or binocular form, that does not contain any video or stills camera means, but comprise passive optical means and a UV image intensifier for allowing the operator of the apparatus to view the combined visible image.

As mentioned hereinabove, processing methods may be applied according to the invention, for processing the SBUV image, the visible image, or the combined image. For carrying out the processing, a processing unit is preferably further provided in the apparatus for improving the contrast between the image of the UV emittance and the image of the visible view in the combined image, or for eliminating noise, for the identification of UV emitters in the field of view, or for capturing transient UV events in the field of view. The processing unit according to the invention may be a digital or analog one.

Preferably, the apparatus may further comprise circuitry for providing an alert indicating the detection of UV emittance above a predefined threshold level. Furthermore, upon such detection, a further action may be automatically initiated, such as the activation of a fire extinguisher. Furthermore, documentation means may be provided in the apparatus for recording of UV events in the field of view.

According to still another preferred embodiment of the invention a method for detecting emittance of UV sources and emittance of IR sources in a common field of view is provided, which comprises imaging a field of view suspected of containing a source of UV emittance, with two imaging units, a first unit being suitable of visually displaying images passing a filter transmitting only in the SBUV range, and a second unit being suitable of visually displaying images in the IR region; and combining the images from said first and second units into a combined visual image.

The method and the apparatus of the invention may be applied in different fields, and for variety of purposes, such as, for the detection and view of corona emittance, for the detection of UV emittance from fire, for locating and tracking objects which are provided with a source emitting UV radiation, for imaging and monitoring of phenomena that produce UV emission, such as, a Cherenkov radiation, or for imaging transient UV emitting phenomena.

The method and apparatus of the invention may also be used in forensic applications for visualization and identification of fingerprints, blood stains, etc.

### Brief Description of the Drawings

In the drawings:
- Fig. 1 is a block diagram of a bispectral solar blind UV/visible imaging system according to one example which is not part of the present invention;
- Figs. 2A, 2B, and 2C are block diagram representations of bispectral imaging systems, configured to observe a field of view along parallel, convergent and coincident optical axii correspondingly Figures 2A and 2B represent examples which do not correspond to the present invention.
- Fig. 3 is a block diagram description of a preferred embodiment of the invention, employing optical means for image overlay;
- Fig. 4 is a block diagram description of another preferred embodiment of the invention, incorporating video imagers and electronic means for image overlay;
- Fig. 5 is a block diagram illustrating a method for carrying out the image overlay by digital image processing means, according to one preferred embodiment of the invention;
- Figs. 6A, 6B, and 6C show the visible, solar blind UV, and bispectral images of an ethanol flame, respectively;
- Fig. 7 shows the bispectral image of a hydrogen flame;
- Figs. 8A and 8B show respectively the visible and the bispectral image of a fire set on gasoline spread on a 20 cm x 20 cm pan of water observed from a range of 400 m;
- Figs. 9A and 9B show respectively the visible and bispectral image of corona on a high voltage electrical transmission line; and
- Figs. 10A and 10B show the visible and the bispectral image of an automobile with a 4 watt mercury discharge lamp attached to its antenna.

### Detailed Description of Preferred Embodiments

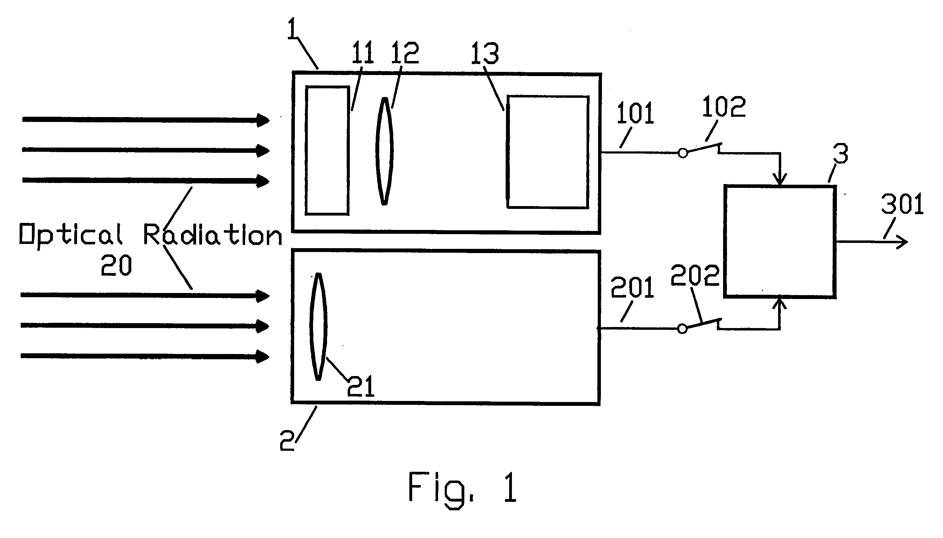

Fig. 1 shows in block diagram the basic structure of a bispectral imaging apparatus which is not part of the present invention. The apparatus comprises three main units, a solar blind ultraviolet imaging unit 1, a visible imaging unit 2, and an image overlay unit 3. Optical radiation 20 from the scene is received by units 1 and 2. In the solar blind ultraviolet imaging unit 1, solar blind ultraviolet optical filter 11 transmits optical radiation in the solar blind wavelength range, and absorbs optical radiation in all other spectral regions. Ultraviolet objective lens 12 focuses radiation transmitted by solar blind ultraviolet optical filter 11 onto the photosensitive area of ultraviolet image sensor 13, creating there the ultraviolet image of the field of view. The optical absorption of solar blind ultraviolet optical filter 11 in all spectral regions exclusive of the 240 nm to 280 nm range is of sufficient magnitude to assure that ultraviolet image sensor 13 will not produce any signal due to daytime terrestrial solar illumination. Ultraviolet image sensor 13 may be of any of the types including but not limited to charge coupled devices, back illuminated charge coupled devices, and photocathode based devices such as image intensifier tubes, intensified charge coupled devices, and electron bombarded charge coupled devices. Ultraviolet image sensor 13 produces a signal 101 representative exclusively of said ultraviolet image of the field of view. Said representative signal may be in the form of a visible image, as in the case of image intensifier tubes having a phosphor screen, or in the form of an electronic signal in video or another format, as in the cases of image sensors incorporating image intensifier tubes and/or charge coupled devices or image intensifier with position sensitive anode outputs.

Visible imaging unit 2 produces a signal 201 representative of the visible image of the field of view. Representative signal 201 may be in the form of a visible optical image or in the form of an electronic signal in video or another format in accordance with the signal type produced by solar blind ultraviolet imaging unit 1, and signal 101.

Visible imaging unit 2 typically comprises an objective lens 21 that produces a visible optical image of the field of view. In embodiments of the invention requiring representative signal 201 in the form of a visible optical image in accordance with the format of signal 101 output from solar blind ultraviolet imaging unit 1, the visible optical image produced by objective lens 21 constitutes signal 201. Embodiments of the invention requiring signal 201 in an electronic format in accordance with the format of signal 101 output from solar blind ultraviolet imaging unit 1, typically incorporate a charge coupled device or other electronic image sensor within visible imaging unit 2. The active area of said charge coupled device or another electronic image sensor (as used), is located at the focal plane of said visible optical image of the field of view. Said charge coupled device, or another electronic image sensor produces an electronic signal 201 in video or another format, corresponding to the visible optical image of the field of view.

Image overlay unit 3 combines signal 101 representative exclusively of said ultraviolet image of the field of view with signal 201 representative of the visible image of the field of view by any of a variety of overlay, mixing and keying methods implemented by optical or electronic means producing bispectral ultraviolet-visible output image 301. Bispectral ultraviolet-visible output image 301 provides spatial information regarding the location and the intensity of sources of ultraviolet radiation relative to visible objects in the field of view. Bispectral solar blind ultraviolet-visible output image 301 may be presented optically or electronically in video or another format. Said optical means for image overlay may comprise partially reflective, dichroic or holographic elements. Electronic means for image overlay can be provided, according to a preferred embodiment of the invention, by converting said optical images into electronic signals either analog or digital, in video or any other image format through the use of a charge coupled device or another image sensor. Said electronic signals may be combined by any of the means including but not limited to arithmetic mixing, non-arithmetic mixing, luminance keying, and chroma keying that are employed in the fields of video processing, image processing and related fields.

Switches 102 and 202 serve to interrupt, when necessary, signal 101 and signal 201 respectively, thus enabling, when desired, viewing of either the visible representation of the solar blind ultraviolet image, or the visible image independently. Switches 102 and 202 may be implemented by a multiplicity of means including but not limited to optical shutters, electrical, or electronic switches, and may be implemented in any section of the signal chain prior to or within the image overlay unit.

When signals 101 and 201 are electronic signals, they are combined by any of the means known in the art including, but not limited to, arithmetic mixing, non-arithmetic mixing, luminance keying, or chroma keying that are employed in the fields of video processing, digital image processing or related fields. Video processing means are typically accomplished by means of electronic circuitry, either analog or digital, for adding or switching two or more signals.

The use of digital image processing, according to one embodiment of the invention, provides a more flexible system than can generally be achieved by a conventional analog system. For example, when the visible and the UV video images are digitized, it is easier to accurately generate by the system an alarm signal upon detecting a UV emittance above a predefined threshold. The means for carrying out the digital signal processing can be typically, but not exclusively, located within the apparatus of the invention, or can be computer based means for manipulating the images.

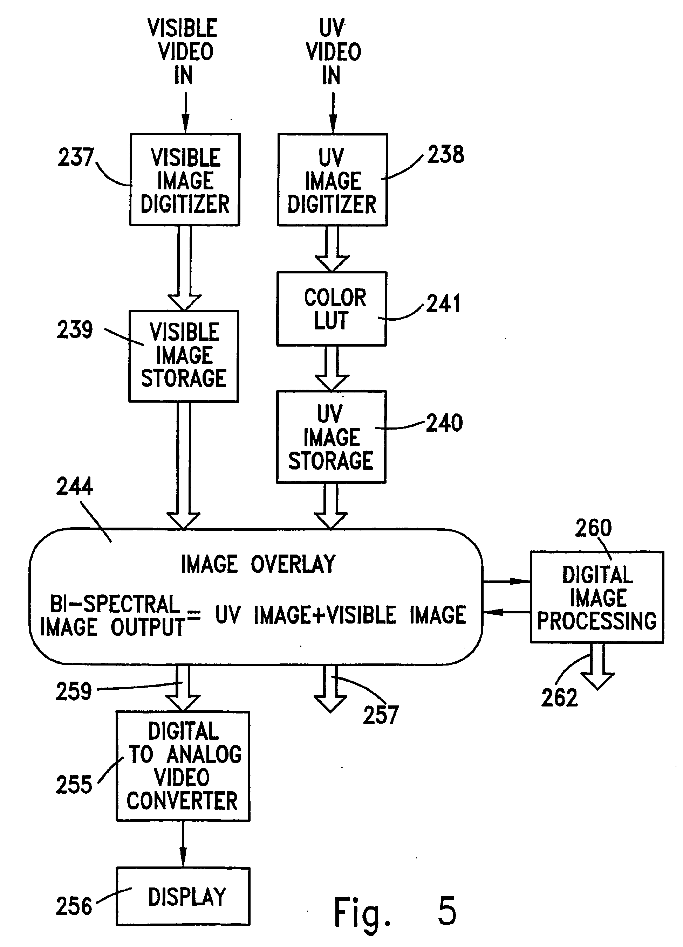

Fig. 5 describes a typical method for carrying out the image overlay by digital image processing. As shown, two video signals representing the visible and UV images respectively, are provided separately by the UV and visible image acquiring means (not shown) to the visible image digitizer 237, and to the UV image digitizer 238, which transform the two signals and produce digitized representations of the two acquired images. The visible digitized image is then provided from the visible image digitizer 237 to the visible image storage 239. The color LUT (Look Up Table) block 241 is optional. As in some cases it is preferable to assign to different levels or intensity of UV emittance different image colors, for obtaining a better contrast when combining the same with the visible image, the color look up table 241 provides at its output specific digital values according to the input values from the UV image digitizer 238. However, in a system where the use of color determination is not included, the output from the UV digitizer can be provided directly to the UV image storage 240. The two visible and UV image storage blocks 239 and 240 store values corresponding to pixels of the visible and the UV images. The image overlay 244 sums the two images, and provides the bispectral image output, in digitized form. There are several algorithms by which block 244 can combine the two images, as hereinafter discussed in more detail. The digital image processing 260 performs further processing (when required) on the combined image, or on only one of the two individual images in order, for example, to neutralize noise interference, to improve the contrast between the images, to correct artifacts such as magnification errors, distortion and lateral displacement introduced by the objective lens and optical alignment, enhance the visibilities of small and/or transient UV images by increasing their size and/or persistence. A first output from the image overlay block 259 is provided to a digital-to-analog video converter 255, and from this block, an analog bispectral video is provided to a display 256, which displays the bispectral image by any conventional means. A second output 257 from the image overlay 244, can optionally be used for storing the combined and/or any of the individual images in memory means. Control outputs 262 from the digital image processing block may optionally be used for different purposes, such as for generating an alert, if a UV emittance above the threshold level is detected, or, for example, for the activation of the suppression system.

In digital processing, such as shown in the block diagram of Fig. 5, the arithmetic mixing of the output image, C, is derived from two input images, A (of the visible image) and B (of the UV image), by the relationship: C = αA + (1-α)B; 0<a<1, wherein α is a dimensionless coefficient. In analog processing, where non-arithmetic mixing is performed, the output image, C, is derived from two input images, A and B, by the relationship: C = A + βB; 0<β<1.

The term "keying" refers herein to the process of combining two video images by arithmetically or non-arithmetically mixing specific portions of one image with corresponding portions of a second image, based on features characteristics in said specific portions of said second image, or based on feature characteristics in corresponding portions of a third image. In luminance keying said feature characteristics relate to the signal level representative of luminance. In chroma keying said feature characteristics relate to intensity of a specific color of portions of the image. A typical keying according to one embodiment of the invention is the generation of an output video image comprising the visible video image exclusive of portions of the field of view in which the solar blind ultraviolet image contains signals above a predefined threshold. Portions of the field of view in said visible video image are replaced by corresponding portions of the solar blind ultraviolet image, or by a third image. The third image is typically a matte color that provides improved contrast against the background of the visible video image.

A multiplicity of purposes may be accomplished by the application of digital image processing techniques as hereinabove discussed, including but not limited to, suppression of noise due to dark noise, suppressing MCP (Micro Channel Plate) defects that produce continuous bright points in the representation of the UV image, eliminating effects of bright UV sources outside the field of view, and providing automated means for the identification of the presence, location, and/or nature of UV light sources in the field of view, and automated identification and recording of transient UV events that occur in the field of view.

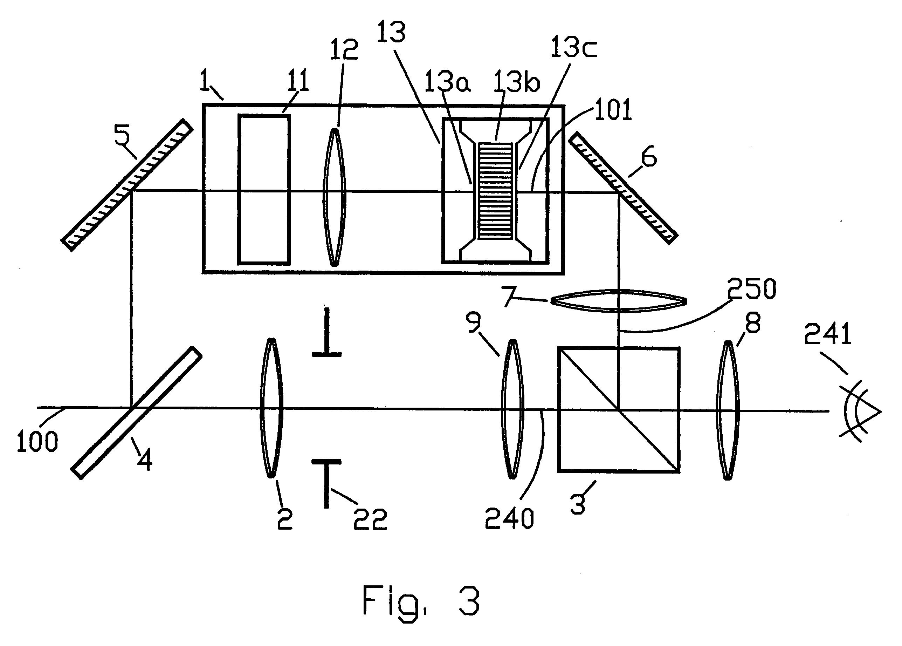

Typically, noise sources are classified as having either a fixed or random pattern. In the system of the invention, fixed pattern noise is typically caused by system artifacts such as defective channels in the MCP (described hereinafter in respect of Fig. 3), that generate a constant electron stream resulting in a constant bright spot at the phosphor screen. Digital image processing may be carried out by algorithms known to those skilled in the art for deleting such fixed pattern noise from the output image. Dark noise and atmospheric scatter of ultraviolet light from bright sources such as arc welding present beyond the limits of the field of view generally produce randomly distributed bright points in the ultraviolet image that are isolated both spatially and temporally from other bright image points. Digital image processing, when used in the bispectral apparatus of the invention, can include algorithms for deleting such randomly distributed, isolated image elements from the output image. Said processing is performed in the system of Fig. 5 by block 260.

Automatic detection is relevant to the detection of ultraviolet radiation sources in fields of view that are typically devoid of such sources, or for the detection of UV transients in the field of view. A typical example of this type of application is fire detection. Automatic detection according to one embodiment of the invention is based on the detection of non-noise signal levels above a predefined threshold. Automatic identification algorithms can be based, according to a preferred embodiment of the invention, on geometric features, such as shape, size, orientation, or location of objects in the field of view, on signal level features, and also on temporal characteristics of the geometric and signal level features such as motion and flicker. The automatic detection algorithms can initiate any known type of action accomplishable by electronic equipment, including (but not limited to) image storage, notification or alarm initiation and/or the initiation of corrective measures such as fire extinguishing. These techniques are known, and will therefore not be discussed herein in detail, for the sake of brevity .

Furthermore, digital image processing techniques may optionally be applied in block 260 on the digital electronic formats of either or both the visible representation of the solar blind ultraviolet image and the visible image of the field of view. A multiplicity of purposes may be accomplished by the application of digital image processing techniques to these images, including, but not limited to, the identification of the location and nature of ultraviolet light sources based on the spatial relationships of said sources to visible objects.

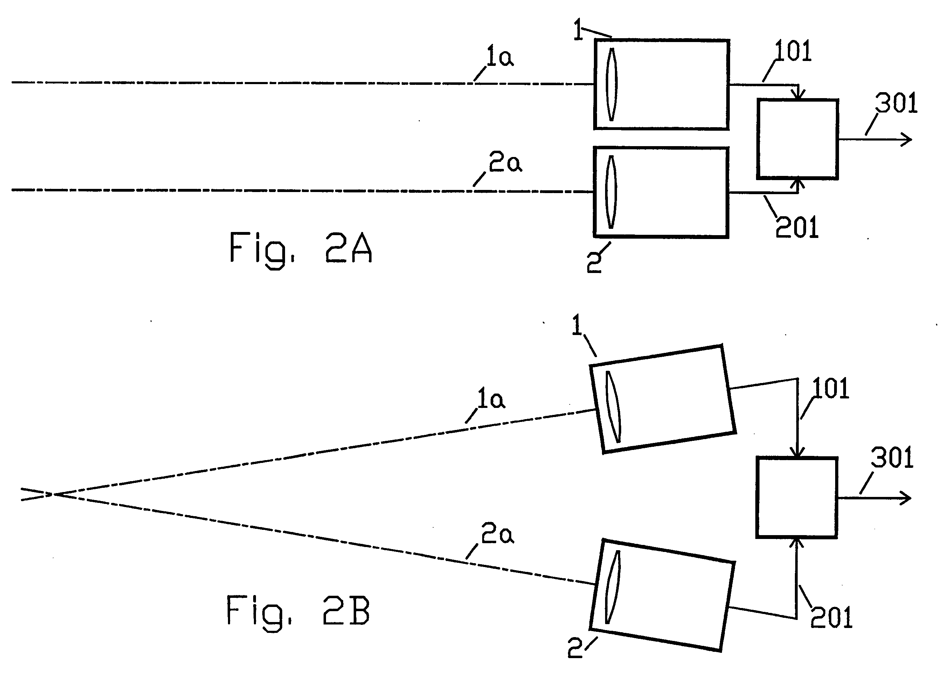

Solar blind ultraviolet imaging unit 1 and visible spectrum imaging unit 2 (Fig. 1) may observe the field of view along two distinct, parallel or intersecting optical axii 1a and 2a as described for exemplary purposes in Figs. 2A and 2B respectively. Observation of the field of view along two distinct optical axii introduces parallax. During the image overlay, said parallax generally introduces errors, expressed as a lateral displacement of the images of the sources of the ultraviolet radiation present in signal 101, relative to objects present in signal 201 representative of the visible image of the field of view. The magnitude of said displacement will vary in accordance with the ranges of the sources of the ultraviolet radiation, and in accordance with the magnitude of the separation at said ranges of said optical axii.

The lateral displacement that results from the parallax may be corrected during image overlay by introducing an equal magnitude of displacement in the opposite direction. Determination of the magnitude of displacement correction required is based on a measurement or estimation of the range of the source of ultraviolet radiation, and on the separation and angle between the two optical axii.

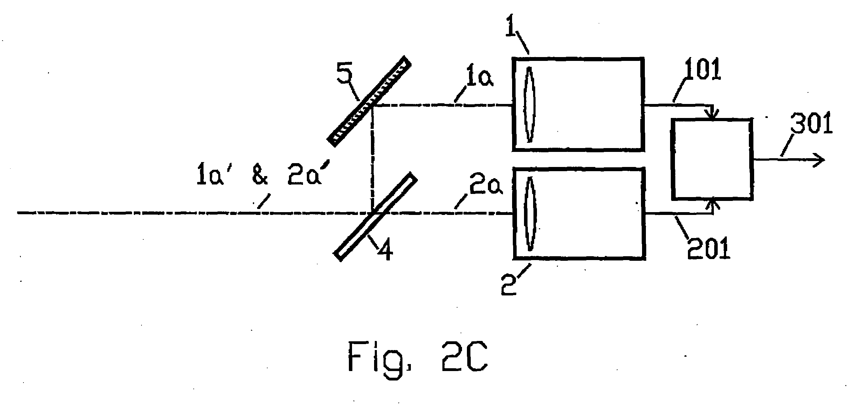

A further embodiment of the invention that eliminates parallax and image displacement is described in Fig. 2C. Beamsplitter 4 is oriented parallel to mirror 5 and is displaced from mirror 5 by a distance equal to the separation of optical axii 1a and 2a. In this configuration, solar blind ultraviolet imaging unit 1 observes the field of view by reflection from beamsplitter 4 and mirror 5 along optical axis 1a' coincident with optical axis 2a thus eliminating image displacement during image overlay. Beamsplitter 4 may be of several types, such as a spectrally neutral, a dichroic, or a holographic nature.

A preferred embodiment of the invention incorporating optical means to achieve image overlay is described in Fig. 3. Optical radiation representing the field of view is directed to the device on axis 100. Solar blind ultraviolet imaging unit 1 observes the field of view by reflection from dichroic beamsplitter 4 and fold mirror 5. Dichroic beamsplitter 4 is highly reflective in the ultraviolet portion of the optical spectrum, and highly transmissive in the visible portion of the optical spectrum. Within solar blind ultraviolet imaging unit 1, solar blind ultraviolet optical filter 11 transmits optical radiation in the solar blind wavelength region, generally in the range of 240 nm to 280 nm, and absorbs optical radiation in all other spectral regions. Ultraviolet objective lens 12 focuses radiation transmitted by solar blind ultraviolet optical filter 11 onto photocathode 13A of ultraviolet image intensifier 13, producing there an inverted ultraviolet image of the field of view. By means of the photoelectric effect, photocathode 13a emits electrons in response to ultraviolet radiation impinging on it, creating an electron image corresponding to the ultraviolet image of the field of view. Said electron image is amplified in microchannel plate (MCP) 13b through the process of electron multiplication achieved by secondary emittance. Electrons exiting the microchannel plate 13B are accelerated to phosphor screen 13c. The energy imparted to the electrons via acceleration excites the phosphor material causing it to emit optical radiation in a specific portion of the visible spectrum. Said portion of the visible spectrum is determined by the type of phosphor material employed. Said optical radiation constitutes a visible representation, 101, of the ultraviolet image of the field of view. Fold mirror 6 introduces a 90° bend into the optical path between solar blind ultraviolet imaging unit 1 and relay lens 7, which in turn projects a reinverted image of the visible representation of the ultraviolet image produced by phosphor screen 13c. Dichroic beam combiner 3 combines the two images it receives along axes 240 and 250, and the combined image is transferred into ocular lens 8. Dichroic beam combiner 3 is highly reflective in the spectral band corresponding to the characteristic emittance of phosphor screen 13c and highly transmissive in all other portions of the visible spectrum. Visible objective lens 2 observes the field of view through dichroic beamsplitter 4 producing an inverted visible image of the field of view. Relay lens 9 reinverts and projects said image produced by visible objective lens 2 through dichroic beam combiner 3 to ocular lens 8. Dichroic beam combiner 3 serves to superimpose the visible spectrum representation of the ultraviolet image of the field of view on the visible image of the field of view for direct viewing by a human observer 241. Said superimposition provides direct visual cues as to the location and nature of ultraviolet radiation sources.

Aperture (iris) 22 may be increased or decreased in diameter in order to control the brightness of the visible image of the field of view, thus controlling the contrast of the visible image of the field of view relative to the visible representation of the solar blind ultraviolet image of the field. Adjustable aperture 22 may also be closed completely for allowing viewing of just the visible representation of the solar blind ultraviolet image of the field of view. Viewing of the visible image of the field of view independent of the visible representation of the solar blind ultraviolet image may be accomplished by switching off the electrical voltage supplied to ultraviolet image intensifier 13.

The embodiment of Fig. 3 is particularly adapted for an optical viewing apparatus. By means of such apparatus the viewer can view an image of the UV radiation sources combined with the visible image of the field of view. Those skilled in the art can easily adapt the configuration of Fig. 3 for producing binoculars or a monocular apparatus for viewing UV radiation in the field of view.

In an additional embodiment of the invention, ocular lens 8 is replaced by a relay lens for imaging the bispectral ultraviolet-visible output onto the film of a still photographic camera, onto the CCD of a video camera, or onto the photosensitive surfaces of other types of imaging devices.

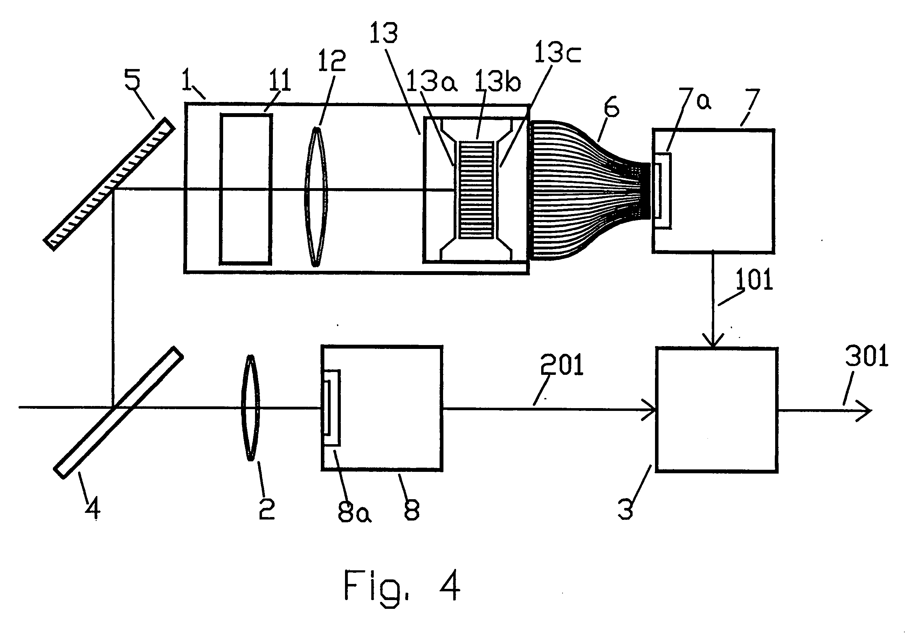

A further embodiment of the invention is described in Fig. 4. In this configuration, a visible representation of the solar blind ultraviolet image is obtained at phosphor screen 13c, as described above. The visible representation of the ultraviolet image of the field of view is coupled by fiber optic taper 6 to the active area of CCD image sensor 7a of CCD camera 7. The CCD camera 7 generates an electronic video signal 101 corresponding to the ultraviolet image of the field of view. The video signal 101 may be further processed to include long time period integration or multiple frame integration. The active area 8a of the CCD camera 8 is positioned at the image plane of visible objective lens 2. The CCD camera 8 generates an electronic video signal 201 corresponding to the visible image of the field of view. Electronic image overlay unit 3 combines video signals 101 and 201, typically by image overlay or by luminance keying methods as hereinabove described for producing output bispectral solar blind ultraviolet-visible video image 301. Output bispectral ultraviolet-visible video image 301 can be displayed, processed and/or recorded with standard video equipment.

In an additional embodiment of the invention, ultraviolet image intensifier 13 is replaced by a back illuminated charged coupled device (BCCD) or another type of charge coupled device.

As mentioned, the components by which the invention can be carried out are conventional. For example, the following components can be used:

| Component | Index in Drawings | Manufacturer | Model No. |
|---|---|---|---|
| Solar Blind Filter | 11 | Ofil Ltd. | SB-BDF-2 |
| UV Objective | 12 | Nikon | UV Nikkor 105 |
| Dichroic Beamsplitter | 4 | Corion MicroCoatings Avendover Corp. | HR 500-x UVR-1 375V86-xx |
| UV image Intensifier | 13a,b,c (in Fig. 3) | Photek Proxitronic | MCP218FONGSBP20 BV 2562 EG |
| Dichroic Beam Combiner | 3(in Fig. 3) | Corion | CR-600-X |
| UV ICCD | 13a-c +6 + 7 (in Fig. 4) | Proxitronic | HL4-S |
| Digital Video Mixer | 3(in Fig. 4) | Panasonic | WJ-MX30 |
| Analog Video Keyer | 3(in Fig. 4) | Ross Video | DSK-7023P |
| UV Imager | 1+6+7 | OFIL | SBI-1 |
| Visible CCD Camera | 8 | Hitachi | KP-D50 |

In a still another embodiment of the invention, the apparatus of the invention can be used for detecting emittance of UV sources and the IR emittance of the surroundings. This can be achieved by having two units, a first unit for the SBUV, and a second unit for the IR. The first unit includes a first filter for the UV, preferably with a passband in the solar blind UV spectrum, and the second unit includes a second filter with a passband in the IR spectrum. A view of the field of view is first acquired by means similar to as described above, and then splitted and provided into the two units, by means of a beam splitter. Therefore, in a similar manner as hereinabove described, two images are created, a first image by the first unit showing the SBUV image of the field of view, and the second image by the second unit showing the IR image of the field of view. Then the two images are combined into one visual image.

### Examples and System Setup

The advantages of the invention in making visible solar blind UV images was demonstrated in numerous experiments. In those experiments visualization of UV emitting sources which are invisible to the eye or to a visible camera were demonstrated. The UV emitting sources were: alcohol flame, hydrogen flame, distant fire, corona discharge and invisible mercury lamp. The experimental set up was the same for all the examples described below.

The experimental bispectral VSBUV imaging breadboard consisted of a solar blind UV video imager, a visible video imager and a video mixer for overlaying the solar blind UV video image on the visible video image. The two video imagers view the same field of view along convergent lines of sight, as described in Fig. 2B.

For the solar blind UV imager an Ofil SBI-1 imager was used in the experimental breadboard. The SBI-1 consists of a solar blind UV bandpass filter OFIL SB-BDF-2 optimized for use with CsRbTe photocathode devices, an f 105 mm, F/4.5 UV objective lens and an intensified CCD camera. The intensified CCD camera PROXITRONIC model HL4S features a 25 mm diagonal, 2-stage MCP image intensifier model BV2562EG with CsRbTe photocathode. The image intensifier phosphor output screen is coupled via a fiber optic taper to a 1.69 cm (2/3 inch) CCD. The camera includes all CCD drive and amplifier circuitry and produces a CCIR format video output signal. The two stage MCP provides sufficient gain such that single photon events at the photocathode produce video signals of 200 mV above the black level. This signal is well above the noise level of the CCD and allows single photon imaging. The dark signal of the camera is less than one photon per frame. The solar blind filter provides 20% transmission at 260 nm and more than 12 orders of magnitude of absorption from 300 nm to 650 nm. This level of blocking is sufficient to allow the use of the SBI-1 camera outdoors, under direct solar illumination. The SBI-1 camera is blind to the sun. With the sun in the camera's field of view, the output video signal of the camera is indistinguishable from the signal, due to a completely dark field of view.

The visible video imager consisted of a Panasonic NV-MC20E CCD color video camera with integrated f 9 - 54 mm F/1.2 objective lens. The NV-MC20E provides a PAL format video output.

The two video signals were combined using a Panasonic MX-30 digital AV mixer operated in arithmetic mixing mode. The ratio of mixing was varied from 0 (only visible image output) to 100% (only UV image output). Bispectral images were obtained at intermediate mixing ratios. Use of a digital mixer obviated the need to synchronize the two video sources. The output video signal was recorded with an Akai VS-F16EM videotape recorder or captured using a MuTech MV-1000 framegrabber.

The two video imagers were mounted on a common mechanical bracket that allowed for the tilt and pan of the visible video imager. Tilt and pan were adjusted to bring the centers of the image into alignment, at the range of interest. The focal length (zoom) of the visible video camera was adjusted in order to equalize its magnification to that of the solar blind UV video imager.

### Example 1: Alcohol flame

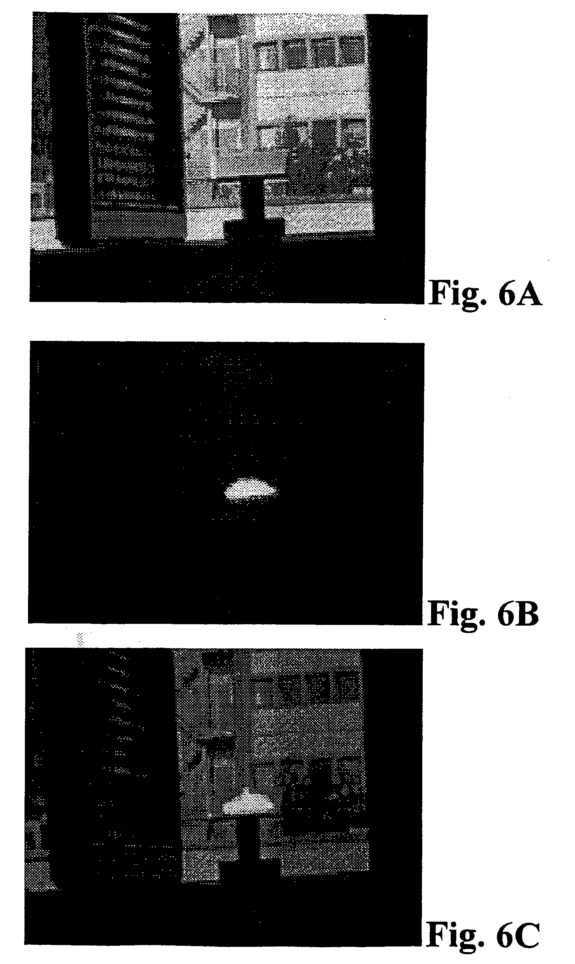

An alcohol flame was lit indoors near an open window and viewed with the bispectral VSBUV imaging breadboard which was situated inside the room, at a distance of 5 meters from the flames, so that the open window was in the background of the image. The alcohol flame emits almost no visible radiation but emits UV radiation. In the visible video output (Fig. 6A), the alcohol flame is not observed. In the solar blind UV video output the alcohol flame is imaged, as is seen in Fig. 6B. In the UV video output, the flame is imaged on a dark background, as the UV imager is blind to the ambient light. In the bispectral visible solar blind UV image, Fig. 6C, the flame is observed, overlayed on the image of the visible surroundings. The UV image is overlayed on the visible image.

### Example 2: Hydrogen flame

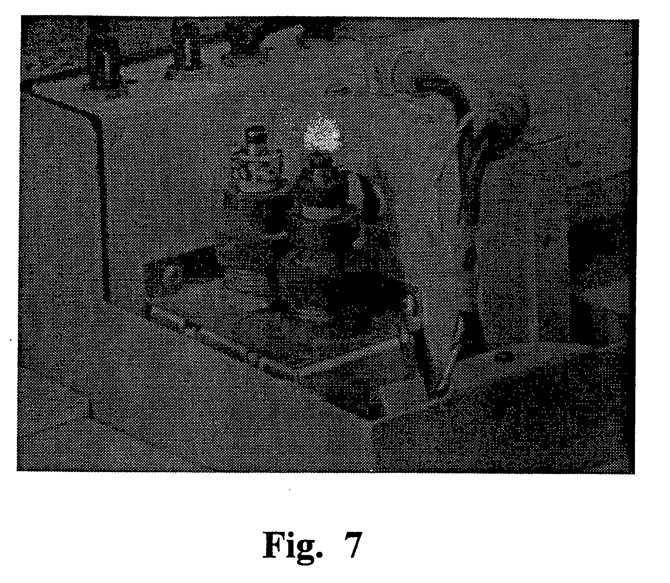

Hydrogen flame, like alcohol flame, emits no visible radiation, but emits UV radiation and weak IR radiation. In this experiment the capability to visualize hydrogen flames was demonstrated with the hydrogen flame of a gas chromatograph detector. For the demonstration, the valve regulating the hydrogen flow was opened to maximum, so as to achieve a flame of the height of 1.5 cm. The bispectral imaging breadboard was placed 2 meters from the gas chromatograph. Fig. 7 shows the bispectral image obtained by overlaying the visible and solar blind UV images.

### Example 3: Distant fire

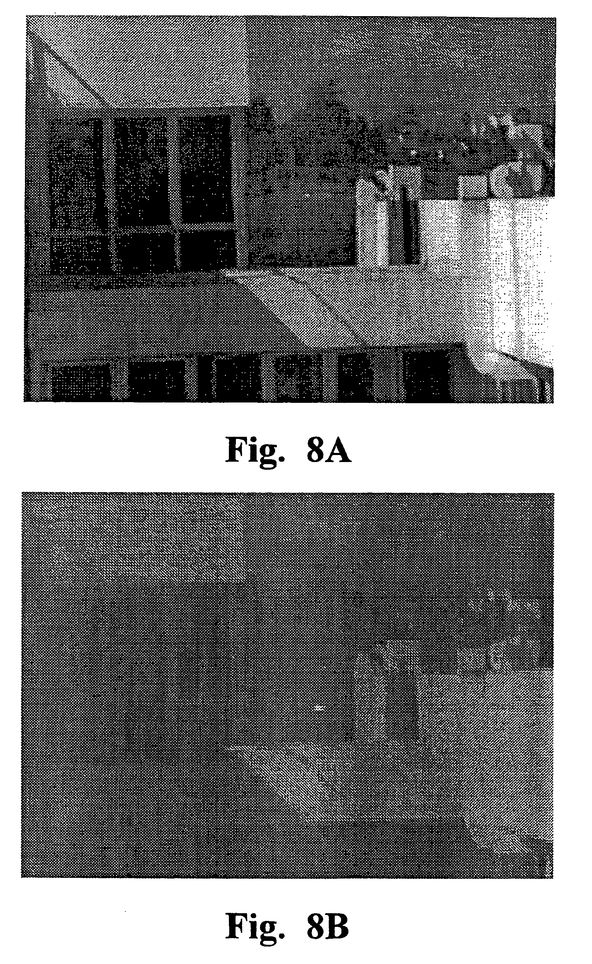

A fire was set by igniting gasoline spread on a 20cm x 20cm pan of water. The bispectral VSBUV imager was placed on a balcony, 6 meters above the ground, facing the field in which the gasoline fire was set. The fire was 400 meters distant from the camera's breadboard. The experiment was performed at midday in May. The sun was high, behind the camera. As is seen in Fig. 8A, no trace of the flame was observed in the visible video output. Also, the fire was not discernible to the naked eye from the imager location. In Fig. 8B, the solar blind UV video output of the flame of the gasoline fire is overlayed on the visible background video output.

### Example 4: Corona discharge

The experiment described herein was conducted in May near Caesarea, Israel. The video images were taken in the middle of the day and the sun was high. The humidity was relatively high and the sounds of corona discharges could be heard from the insulators of the high voltage line on the electrical tower. In this experiment, the bispectral VSBUV breadboard was directed up to face the top of the tower. The distance between the corona and the cameras was about 50 meters. The sun was within 5 - 10° of the limits of the field of view.

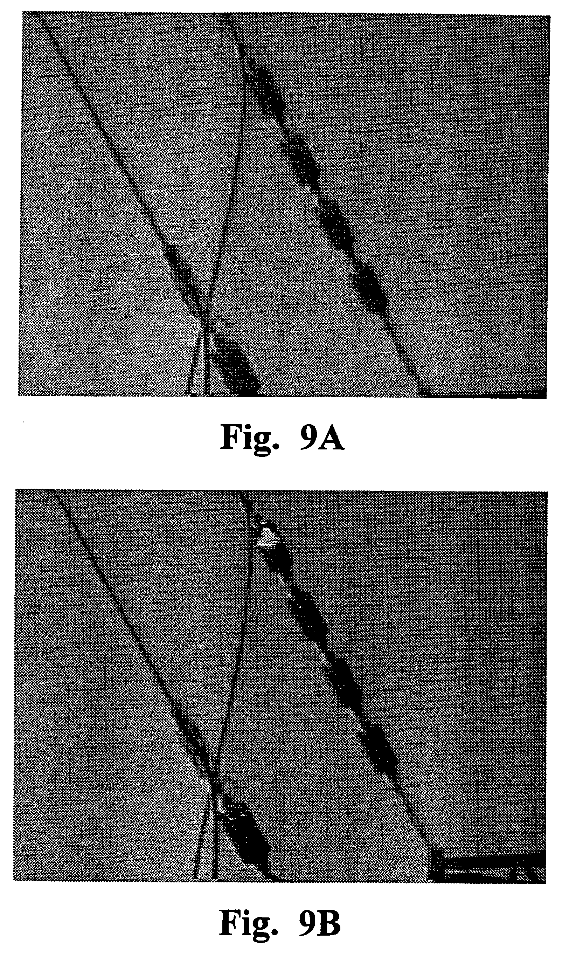

The overlay of the solar blind UV image of the corona on the visible background is shown in Fig. 9B. No trace of the corona emittance was observed in the visible video output shown in Fig. 9A. The corona emittance could not be observed by the eyes either. Corona emissions are visible to the naked eye only under very low ambient lightning conditions.

### Example 5: Invisible mercury lamp

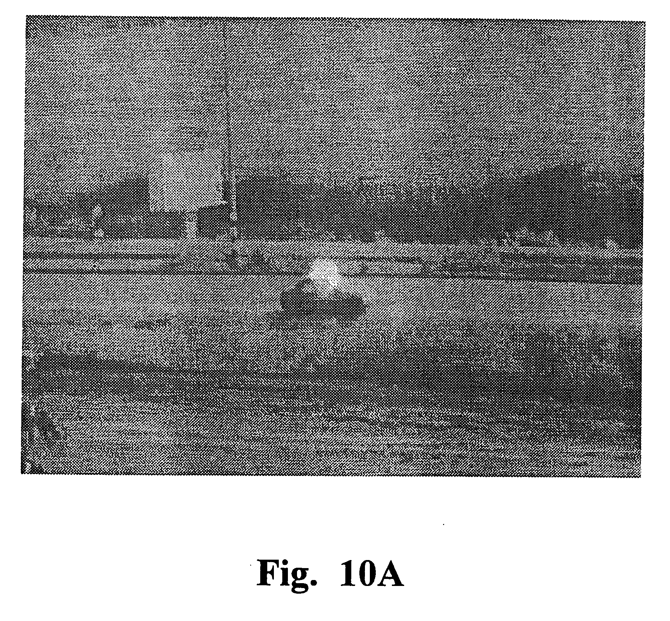

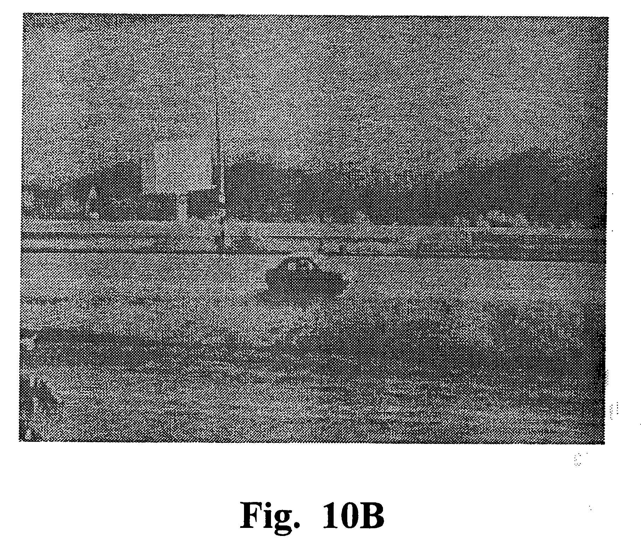

A 4 watt low pressure mercury discharge pen lamp was attached to the top of the antenna of an automobile. The images exhibited in Figs. 10A and 10B show the automobile before and after turning on the lamp. Both of these images were obtained via the bispectral video output. The mercury discharge lamp emits mainly in the mercury emission line at 254nm, which is within the solar blind band. Some visible light is also emitted from the lamp but is not visible to the eye or to a visible video camera from a distance more than about 10 meters. The bispectral VSBUV video breadboard viewed the automobile from a roof top, 14 meters high, approximately 150 meters distant from the automobile. From this distance only the solar blind UV camera could detect the light emitted from the mercury lamp. No trace of a light, emitted from the lamp, could be observed in the visible video output.

The intensity of the mercury discharge pen lamp is not large and does not exceed 10⁻³ watt/sr. In this experiment, the start of which is shown in Figs. 10A and 10B, the car drove along roads in the area and the UV image could clearly be followed as it drove along the roads. In the experiment described herein, the lamp was tracked to a distance of 1.5 Km.

The halo present in the UV component of the image, around the mercury discharge lamp, is characteristic to bright UV sources. This image spread may be attributable to blooming effects in the image intensifier and the CCD. Atmospheric scattering may also contribute to the halo.

## Claims

1. A method for detecting, imaging, locating and visualizing an object which emits or reflects UV radiation in an environment illuminated at a level up to daytime outdoor illumination, the method comprising:
- simultaneously imaging a scene suspected of containing an object which emits or reflects UV radiation by two separate imaging units, a first solar blind UV (SBUV) imaging unit (1) imaging in the SBUV spectral band and comprising a solar blind filter (11) and a UV photocathode (13a), and a second, visible or IR imaging unit (2) imaging in the visible or IR spectrum range respectively, wherein said simultaneous imaging involves collecting of radiation from the scene via a common optical axis (1a', 2a'), and using a beam splitter (4) which is located at the end of said common optical axis (100), splitting the radiation into said two separate imaging units, said beam splitter is highly reflective in the ultraviolet portion of the optical spectrum, and highly transmissive in the visible portion of the optical spectrum ; and
- combining (3) the images as obtained by said simultaneous imaging in a common optical axis (1a, 2a), by overlaying in a manner which minimizes image displacement a first image obtained from said first imaging unit (1) over a second image obtained from said second imaging unit (2) thereby to form a combined and overlayed visual image showing the UV reflection or radiation in its position within the background scenery of the visible or IR scene respectively, and with no parallax due to said collecting of radiation from the scene via a common axis and use of beam splitter.

2. A method according to claim 1, wherein the combining (3) of the images is carried out optically (8) allowing a viewer (241) to visualize the combined image; or
wherein the combining of the images is performed electronically (244) and the combined image is displayed to the user on a video display (256).

3. A method according to claim 1, wherein said simultaneous imaging comprises the collection of light rays from the scene spanning at least the visible and solar blind UV spectra, and separation (4) of the light rays to light rays that arc directed (1a) to the SBUV unit and to light rays that are directed (2a) to the visible imaging unit.

4. Apparatus for detecting, imaging, locating and visualizing an object which reflects or emits UV radiation in an environment illuminated at a level up to daytime outdoor illumination, the apparatus comprising:
- Image stage comprising two separate imaging units (1, 2), for collecting light rays (100) from a scene via a common optical axis (1a', 2a'), the light rays spanning at least a visible or IR spectrum and a Solar Blind UV (SBUV) spectrum, the image stage also comprises a beam splitter (4) which is located at the end of said common optical axis which is highly reflective in the ultraviolet portion of the optical spectrum and highly transmissive in the visible portion of the optical spectrum,, said beam splitter splits the collected light rays into an SBUV imaging unit (1), and into a visible or IR respectively imaging unit (2);
- Said SBUV imaging unit (1) comprising:
a. A solar blind ultraviolet optical filter (11) allowing transmittance of optical radiation in a solar blind UV spectrum range only, and absorbing optical radiation in all other spectral regions;
b. SBUV image providing means comprising an SBUV image sensor (13) for receiving the optical radiation in UV spectral range only passed through said solar blind ultraviolet optical filter (11), and producing a first visual image, being the solar blind UV image;
- said visible or IR imaging unit (2) respectively receiving said light rays from the scene and producing a second visible image, representing visible or IR background scenery respectively of the scene; and
- combining means (3) for receiving said first visual image from the SBUV imaging unit (1) and said second visible image from the visible or IR imaging unit (2) respectively, and combining by overlaying said first visual image over said second visible image in a manner which minimizes image displacement thereby to produce one combined and overlaid visual image showing the said object which emits or reflects said UV radiation in its position within the visible or IR background scenery respectively, and with no parallax due to said imaging via a common axis and use of said beam splitter (4).

5. Apparatus according to claim 4, wherein the image stage comprises two image elements, a first image element in the UV unit (1) for producing the first image of the field of view in the SBUV unit and a second image element in the visible unit (2) for producing a second image of the field of view in the visible unit (2), wherein preferably the first and second elements are optical lenses, wherein preferably the solar blind ultraviolet optical filter (11) is positioned before the optical lens (12) of the SBUV unit, after the optical lens (12) of the UV unit, or incorporated within the optical lens (12) of the SBUV unit.

6. Apparatus according to claim 5, wherein the image stage comprises said beamsplitter (4) receiving light rays from the field of view, and splitting the received light rays such that the beams (2a) spanning at least the visible spectrum are directed toward the visible unit (2), and the beams (1a) spanning at least the SBUV spectrum are directed toward the SBUV unit (1), wherein preferably the beam splitter (4) is a dichroic beam splitter.

7. Apparatus according to claim 4 wherein the image sensor (13) at the SBUV unit further comprises a first lens (12) for receiving the radiation in the solar blind spectral range passing through the solar blind ultraviolet optical filter (11) and for producing a solar blind UV image on the image plane of the first lens.

8. Apparatus according to claim 4, wherein the UV image sensor (13) is a fluorescent screen; or
wherein the UV image sensor (13) is a UV solar blind image intensifier; or
wherein the UV image sensor (13) is selected from among CCD, BCCD, EBCCD, ICCD, MCP-PMT having multi-anode.

9. Apparatus according to claim 5, wherein the visible image unit comprises an image sensor selected from among the CCD, CMOS, CID receiving the visible image, and producing second electronic signals describing said image.

10. Apparatus according to claim 4 wherein the combined visual image (244) is obtained by arithmetic mixing, non-arithmetic mixing, luminance keying or chrome keying, combining said first and second electronic signals; or
further comprising a display (256) for displaying the combined visual image; or
further comprising stills camera or electronic recorder for recording the combined visual image (244); or
further comprising passive optical means (12) and a UV image intensifier (13) for allowing an operator of the apparatus to view the combined visual image.

11. Apparatus according to claim 5, further comprising a processing unit (260) for processing electronic signals describing the UV image, the visible or IR image or the combined image, for improving the contrast between the UV image and the visible or IR image in the combined visual image, or for the elimination of noise, the identification of UV emitters in the field of view, or the capture of transient UV events in the field of view.

12. Apparatus according to claim 11, wherein the processing unit (260) is a digital processing unit; or
wherein the processing unit (260) is an analog processing unit; or
further comprising means for providing an alert as to the detection of SBUV radiation which is above a predefined threshold level; or
further comprising means for initiating action as to the detection of SBUV radiation which is above a predefined threshold level.

13. Apparatus according to claim 12, wherein the action is the initiation of fire extinguisher; or
wherein the action is the documentation of UV emitting events in the field of view.

14. Apparatus according to claim 4 wherein the combination (3) of the visible image of the solar blind UV image of the field of view and the image produced by the visible or IR unit is carried out optically by a dichroic beam combiner simultaneously viewing said images.

15. Apparatus according to claim 14, made in a monocular or binocular form.

16. A method according to claim 1, for detecting, imaging, locating and visualizing an object which emits UV radiation wherein the UV radiation is caused by electrical discharge.

17. Apparatus according to claim 5, for detecting imaging, locating and visualizing an object which emits UV radiation caused by electrical discharge.

18. The method according to claim 1 for detecting imaging, locating and visualizing an object which emits UV radiation caused by combustion.

19. The method according to claim 1 for detecting locating and tracking, while in movement, objects which are provided with a light source emitting UV radiation.

20. The method according to claim 1 for imaging and monitoring a phenomenon that produces UV emission, wherein preferably the phenomenon is a Cherenkov radiation or wherein preferably the phenomena produce transient UV emissions.

21. The method according to claim 1 for the visual imaging of the reflections from objects illuminated by UV light sources, wherein preferably the objects illuminated by the UV sources are finger prints or fluid stains..

22. Apparatus according to claim 4 for detecting UV radiation from combustion.

23. Apparatus according to claim 4 for detecting and locating and tracking objects which are provided with a light source emitting UV radiation.

24. Apparatus according to claim 4 for detecting imaging and monitoring a phenomenon that produces UV emission, wherein preferably the phenomenon is a Cherenkov radiation or wherein preferably the phenomenon produces transient UV emissions.

25. Apparatus according to claim 4 for detecting and visual imaging of reflections from objects illuminated by UV light sources, wherein preferably the objects illuminated by the UV sources are finger prints or fluid stains.

## Patentansprüche

1. Ein Verfahren zur Erfassung, Abbildung, Lokalisierung und Visualisierung eines Objekts, das UV-Strahlung in einer Umgebung aussendet oder reflektiert, die bei einem Pegel bis zu Tages-Außenbeleuchtung beleuchtet ist, wobei das Verfahren Folgendes umfasst:
- gleichzeitige Abbildung einer Szene, von der vermutet wird, dass sie ein Objekt enthält, das UV-Strahlung aussendet oder reflektiert, durch zwei separate Abbildungs-Einheiten, eine erste gegen Sonnenlicht unempfindliche UV-Abbildungs-Einheit (SBUV) (1), die im SBUV-Spektralbereich abbildet, und umfassend einen gegen Sonnenlicht unempfindlichen Filter (11) und eine UV-Fotokathode (13a), und eine zweite Abbildungs-Einheit(2) für sichtbares oder Infrarotlicht, die im sichtbaren beziehungsweise IR-Spektralbereich abbildet, wobei die gleichzeitige Abbildung Folgendes beinhaltet: die Erfassung der Strahlung von der Szene über eine gemeinsame optische Achse (1a', 2a') und mit Hilfe eines Strahlungsteilers (4), der sich am Ende der gemeinsamen optischen Achse (100) befindet und die Strahlung auf die zwei getrennten Abbildungs-Einheiten aufteilt, wobei der Strahlungsteiler hochreflektierend im ultravioletten Teil des optischen Spektrums ist und hochdurchlässig im sichtbaren Teil des optischen Spektrums ist, und
- Kombination (3) der Bilder, wie sie durch die gleichzeitige Abbildung in einer gemeinsamen optischen Achse (1a, 2a) gewonnen wurden, durch Überlagern, auf eine Art und Weise, welche die Bildverschiebung minimiert, eines ersten Bildes, das von der ersten Abbildungs-Einheit (1) gewonnen wurde, über ein zweites Bild, das von der zweiten Abbildungs-Einheit (2) gewonnen wurde, um so ein kombiniertes und überlagertes visuelles Bild zu gewinnen, das die UV-Reflexion oder -Strahlung in ihrer Position innerhalb der Hintergrundszenerie der sichtbaren beziehungsweise IR-Szene darstellt, und ohne Parallaxe aufgrund der Erfassung der Strahlung von der Szene über eine gemeinsame Achse und der Verwendung des Strahlungsteilers.

2. Ein Verfahren gemäß Anspruch 1, wobei die Kombination (3) der Bilder optisch (8) durchgeführt wird und es einem Betrachter (241) ermöglicht, das kombinierte Bild zu visualisieren, oder
wobei die Kombination der Bilder elektronisch (244) durchgeführt und das kombinierte Bild dem Benutzer auf einer Videoanzeige (256) angezeigt wird.

3. Ein Verfahren gemäß Anspruch 1, wobei die gleichzeitige Abbildung die Erfassung von Lichtstrahlen von der Szene umfasst, die mindestens die sichtbaren und die gegen Sonnenlicht unempfindliche UV-Spektren umfassen, und Aufteilung (4) der Lichtstrahlen in Lichtstrahlen, die (1a) auf die SBUV-Einheit gerichtet sind, und Lichtstrahlen, die (2a) auf die Abbildungs-Einheit für sichtbares Licht gerichtet sind.

4. Vorrichtung zur Erfassung, Abbildung, Lokalisierung und Visualisierung eines Objekts, das UV-Strahlung in einer Umgebung reflektiert oder aussendet, die bei einem Pegel bis zu Tages-Außenbeleuchtung beleuchtet ist, wobei die Vorrichtung Folgendes umfasst:
- einen Bild-Stufe, der zwei getrennte Abbildungs-Einheiten (1, 2) zur Erfassung von Lichtstrahlen (100) von einer Szene über eine gemeinsame optische Achse (1a', 2a') umfasst, wobei sich die Lichtstrahlen über mindestens ein sichtbares oder IR-Spektrum und ein gegen Sonnenlicht unempfindliches UV-Spektrum (SBUV-Spektrum) erstrecken, wobei die Bild-Stufe auch einen Strahlungsteiler (4) umfasst, welcher sich am Ende der gemeinsamen optischen Achse befindet und im ultravioletten Teil des optischen Spektrums hochreflektierend und im sichtbaren Teil des optischen Spektrums hochdurchlässig ist; wobei der Strahlungsteiler die erfassten Lichtstrahlen auf eine SBUV-Abbildungs-Einheit (1) und eine sichtbare beziehungsweise IR-Abbildungs-Einheit (2) aufteilt;
- wobei die SBUV-Abbildungs-Einheit (1) folgendes umfasst:
a. einen gegen Sonnenlicht unempfindlichen UltraviolettOptikfilter (11), der die Transmission optischer Strahlung nur in einem gegen Sonnenlicht unempfindlichen UV-Spektralbereich ermöglicht und die optische Strahlung in allen anderen Spektralbereichen absorbiert,
b. SBUV-Bild-liefernde Mittel, die einen SBUV-Bildsensor (13) für den Empfang der optischen Strahlung nur im UV-Spektralbereich umfassen, die durch den gegen Sonnenlicht unempfindlichen Ultraviolettoptikfilter (11) durchgeleitet wird, und ein erstes visuelles Bild erzeugen, welches das gegen Sonnenlicht unempfindliche UV-Bild ist,
- wobei die sichtbare beziehungsweise IR-Abbildungs-Einheit (2) die Lichtstrahlen von der Szene empfängt und ein zweites sichtbares Bild erzeugt, welches sichtbare beziehungsweise IR-Hintergrundszenerie der Szene darstellt, und
- Kombinationsmittel (3) für den Empfang des ersten visuellen Bildes von der SBUV-Abbildungs-Einheit (1) und des zweiten sichtbaren Bildes von der sichtbaren beziehungsweise IR-Abbildungs-Einheit (2) und Kombination durch Überlagerung des ersten visuellen Bildes über das zweite sichtbare Bild, auf eine Art und Weise, welche die Bildverschiebung minimiert, um so ein kombiniertes und überlagertes visuelles Bild zu erzeugen, welches das Objekt darstellt, das die UV-Strahlung aussendet oder reflektiert, und zwar in seiner Position innerhalb der sichtbaren beziehungsweise IR-Hintergrundszenerie, und ohne Parallaxe aufgrund der Abbildung über eine gemeinsame Achse und der Verwendung des Strahlungsteilers (4).

5. Vorrichtung gemäß Anspruch 4, wobei die Bild-Stufe zwei Bildelemente umfasst, ein erstes Bildelement in der UV-Einheit (1) zur Erstellung des ersten Bildes des Bildfeldes in der SBUV-Einheit und eines zweiten Bildelements in der sichtbaren Einheit (2) zur Erzeugung eines zweiten Bildes des Bildfeldes in der sichtbaren Einheit (2), wobei das erste und das zweite Element vorzugsweise optische Linsen sind, wobei der gegen Sonnenlicht unempfindliche Ultraviolettoptikfilter (11) vorzugsweise vor der optischen Linse (12) der SBUV-Einheit oder hinter der optischen Linse (12) der UV-Einheit positioniert ist, oder in die optische Linse (12) der SBUV-Einheit integriert ist.

6. Vorrichtung gemäß Anspruch 5, wobei die Bild-Stufe den Strahlungsteiler (4) umfasst, der Lichtstrahlen vom Bildfeld empfängt und die empfangenen Lichtstrahlen so aufteilt, dass die Strahlen (2a), die sich mindestens über das sichtbare Spektrum erstrecken, auf die sichtbare Einheit (2) gerichtet sind, und die Strahlen (1a), die sich mindestens über das SBUV-Spektrum erstrecken, auf die SBUV-Einheit (1) gerichtet sind, wobei der Strahlungsteiler (4) vorzugsweise ein dichroitischer Strahlungsteiler ist.

7. Vorrichtung gemäß Anspruch 4, wobei der Bildsensor (13) an der SBUV-Einheit weiter eine erste Linse (12) umfasst, um die Strahlung in dem gegen Sonnenlicht unempfindlichen Spektralbereich zu empfangen, der durch den gegen Sonnenlicht unempfindlichen Ultraviolettoptikfilter (11) dringt, und um ein gegen Sonnenlicht unempfindliches UV-Bild auf der Bildebene der ersten Linse zu erzeugen.

8. Vorrichtung gemäß Anspruch 4, wobei der UV-Bildsensor (13) ein fluoreszierender Bildschirm ist oder
wobei der UV-Bildsensor (13) ein UV-Solar-Blind-Bildverstärker ist, oder
wobei der UV-Bildsensor (13) gewählt ist aus CCD, BCCD, EBCCD, ICCD, MCP-PMT mit mehreren Anoden.

9. Vorrichtung gemäß Anspruch 5, wobei die Einheit für sichtbares einen Bildsensor umfasst, gewählt aus CCD, CMOS, CID, der das sichtbare Bild empfängt und zweite elektronische Signale erzeugt, welche das Bild beschreiben.

10. Vorrichtung gemäß Anspruch 4, wobei das kombinierte visuelle Bild (244) erzeugt wird durch arithmetisches Mischen, nicht-arithmetisches Mischen, Luminanz-Tastung oder Chrome-Tastung, die die ersten und zweiten elektronischen Signale kombinieren, oder
weiter eine Anzeige (256) zum Anzeigen des kombinierten visuellen Bildes umfassend, oder
weiter eine Fotokamera oder ein elektronisches Aufnahmegerät zur Aufnahme des kombinierten visuellen Bildes (244) umfassend, oder
weiter passive optische Mittel (12) und einen UV-Bildverstärker (13) umfassend, um es einem Bediener der Vorrichtung zu ermöglichen, das kombinierte visuelle Bild zu sehen.

11. Vorrichtung gemäß Anspruch 5, die weiter eine Verarbeitungseinheit (260) umfasst, zur Verarbeitung elektronischer Signale, die das UV-Bild, das sichtbare oder IR-Bild oder das kombinierte Bild beschreiben, zur Verbesserung des Kontrastes zwischen dem UV-Bild und dem sichtbaren oder IR-Bild im kombinierten visuellen Bild oder zur Beseitigung von Störungen, Identifikation von UV-Sendern im Bildfeld oder zur Erfassung kurzzeitiger UV-Ereignisse im Bildfeld.

12. Vorrichtung gemäß Anspruch 11, wobei die Verarbeitungseinheit (260) eine digitale Verarbeitungseinheit ist, oder
wobei die Verarbeitungseinheit (260) eine analoge Verarbeitungseinheit ist, oder
weiter Mittel zur Abgabe einer Warnung betreffs der Erfassung von SBUV-Strahlung umfassend, die oberhalb eines vordefinierten Schwellenwerts liegt, oder
weiter Mittel zum Einleiten von Handlungen betreffs der Erfassung von SBUV-Strahlung umfassend, die oberhalb eines vordefinierten Schwellenwerts liegt.

13. Vorrichtung gemäß Anspruch 12, wobei die Handlung die Initiierung eines Feuerlöschers ist, oder
wobei die Handlung die Protokolierung von UV-sendenden Ereignissen im Bildfeld ist.

14. Vorrichtung gemäß Anspruch 4, wobei die Kombination (3) des sichtbaren Bildes des gegen Sonnenlicht unempfindlichen UV-Bildes des Bildfelds und des Bildes, das von der sichtbaren oder IR-Einheit erzeugt wird, optisch von einem dichroitischen Strahlen-Kombinierer durchgeführt wird, der die Bilder gleichzeitig erfasst.

15. Vorrichtung gemäß Anspruch 14, die in monokularer oder binokularer Form ausgeführt ist.

16. Ein Verfahren gemäß Anspruch 1 zur Erfassung, Abbildung, Lokalisierung und Visualisierung eines Objekts, das UV-Strahlung aussendet, wobei die UV-Strahlung durch elektrische Entladung verursacht wird.

17. Eine Vorrichtung gemäß Anspruch 5 zur Erfassung, Abbildung, Lokalisierung und Visualisierung eines Objekts, das UV-Strahlung aussendet, die durch elektrische Entladung verursacht wird.

18. Das Verfahren gemäß Anspruch 1 zur Erfassung, Abbildung, Lokalisierung und Visualisierung eines Objekts, das UV-Strahlung, verursacht durch Verbrennung, aussendet.

19. Das Verfahren gemäß Anspruch 1 zur Erfassung, Lokalisierung und Verfolgung, in Bewegung, von Objekten, die mit einer Lichtquelle ausgestattet sind, welche UV-Strahlung aussendet.

20. Das Verfahren gemäß Anspruch 1 zur Abbildung und Überwachung eines Phänomens, das UV-Emission erzeugt, wobei das Phänomen vorzugsweise eine Tscherenkow-Strahlung ist oder wobei die Phänomene vorzugsweise transiente UV-Emissionen erzeugen.

21. Das Verfahren gemäß Anspruch 1 für die visuelle Abbildung der Reflexionen von Objekten, die von UV-Lichtquellen beleuchtet werden, wobei die Objekte, die von den UV-Quellen beleuchtet werden, vorzugsweise Fingerabdrücke oder Verfärbungen durch Fluide sind.

22. Vorrichtung gemäß Anspruch 4 zur Erfassung von UV-Strahlung aus Verbrennung.

23. Vorrichtung gemäß Anspruch 4 zur Erfassung und Lokalisierung und Verfolgung von Objekten, die mit einer Lichtquelle ausgestattet sind, welche UV-Strahlung aussendet.

24. Vorrichtung gemäß Anspruch 4 zur Erfassung, Abbildung und Überwachung eines Phänomens, das UV-Emission erzeugt, wobei das Phänomen vorzugsweise eine Tscherenkow-Strahlung ist oder wobei das Phänomen vorzugsweise transiente UV-Emissionen erzeugt.

25. Vorrichtung gemäß Anspruch 4 zur Erfassung und visuellen Abbildung von Reflexionen von Objekten, die von UV-Lichtquellen beleuchtet werden, wobei die Objekte, die von den UV-Quellen beleuchtet werden, vorzugsweise Fingerabdrücke oder Verfärbungen durch Fluide sind.

## Revendications

1. Procédé pour la détection, l'imagerie, la localisation et la visualisation d'un objet qui émet ou réfléchit un rayonnement UV dans un environnement illuminé à un niveau allant jusqu'à une illumination diurne en extérieur, le procédé comprenant :
- l'imagerie simultanée d'une scène suspectée de contenir un objet qui émet ou réfléchit un rayonnement UV par deux unités d'imagerie séparées, une première unité d'imagerie (1) de type aveugle aux UV d'origine solaire (solar blind UV - SBUV), imageant dans la bande spectrale SBUV et comprenant un filtre d'occultation solaire (11) et une photocathode UV (13a), et une deuxième unité d'imagerie (2), traitant la lumière visible ou les IR, imageant dans la plage de spectre de la lumière visible ou des IR, respectivement, dans lequel ladite imagerie simultanée implique la collecte de rayonnement provenant de la scène, via un axe optique (1a', 2a') commun, et utilisant un diviseur de faisceau (4) situé à l'extrémité dudit axe optique commun (100), divisant le rayonnement dans lesdites deux unités d'imagerie séparées, ledit diviseur de faisceau étant hautement réflectif dans la partie ultraviolet du spectre optique, et hautement transmissif dans la partie visible du spectre optique ; et
- la combinaison (3) des images, telles qu'obtenues par ladite imagerie simultanée, dans un axe optique commun (la, 2a), par superposition, d'une manière minimisant le déplacement d'image, d'une première image obtenue à partir de ladite première unité d'imagerie (1) sur une deuxième image obtenue à partir de ladite deuxième unité d'imagerie (2), de manière à former une image visuelle combinée et superposée, représentant la réflexion ou le rayonnement UV, à sa position à l'intérieur de la scène d'arrière-plan, de la scène, en lumière visible ou IR, respectivement, et sans aucun parallaxe imputable à ladite collecte de rayonnement à partir de la scène, via un axe commun et l'utilisation du diviseur de faisceau.

2. Procédé selon la revendication 1, dans lequel la combinaison (3) est images est accomplie optiquement (8), en permettant à un observateur (241) de visualiser l'image combinée ; ou
dans lequel la combinaison des images est accomplie électroniquement (244) et l'image combinée est affichée à l'utilisateur, sur un affichage vidéo (256).

3. Procédé selon la revendication 1, dans lequel ladite imagerie simultanée comprend la collecte de rayons lumineux provenant de la scène couvrant au moins les spectres de lumière visible et UV à occultation solaire, et la séparation (4) des rayons lumineux, en des rayons lumineux dirigés (1a) sur l'unité SBUV et en des rayons lumineux dirigés (2a) sur l'unité d'imagerie à lumière visible.

4. Appareil pour la détection, l'imagerie, la localisation et la visualisation d'un objet qui réfléchit ou émet un rayonnement UV dans un environnement illuminé à un niveau allant jusqu'à une illumination diurne en extérieur, l'appareil comprenant :
- un étage d'imagerie, comprenant deux unités d'imagerie (1, 2) séparées, pour collecter des rayons de lumière (100) provenant d'une scène, via un axe optique (1a', 2a') commun, les rayon de lumière couvrant au moins un spectre visible ou IR et un spectre UV d'origine solaire (solar blind UV - SBUV), l'étage d'imagerie comprenant également un diviseur de faisceau (4), disposé à l'extrémité dudit axe optique commun, hautement réflectif dans la partie ultraviolet du spectre optique et hautement transmissif dans la partie visible du spectre optique, ledit diviseur de faisceau divisant les rayons de lumière collectés dans une unité d'imagerie (1) de type aveugle aux UV d'origine solaire (solar blind UV - SBUV), et dans une unité d'imagerie (2), traitant la lumière visible ou les IR, respectivement ;
- ladite unité d'imagerie SBUV (1) comprenant :
a. un filtre optique ultraviolet aveugle à la lumière solaire (11), permettant une transmittance du rayonnement optique dans une plage spectrale UV aveugle à la lumière solaire uniquement, et absorbant le rayonnement optique dans toutes les autres régions spectrales ;
b. des moyens de fourniture d'image SBUV, comprenant un capteur d'image SBUV (13) pour recevoir le rayonnement optique dans la plage spectrale des UV uniquement ayant passé par ledit filtre optique ultraviolet aveugle à la lumière solaire (11), et produisant une première image visuelle, qui est l'image UV à occultation de la lumière solaire ;
- ladite unité d'imagerie (2), traitant la lumière visible ou les IR, recevant respectivement lesdits rayons de lumière provenant de la scène et produisant une deuxième image visible, représentant un paysage d'arrière plan, en lumière visible ou IR, respectivement, de la scène ; et
- des moyens de combinaison (3), pour recevoir ladite première image visuelle, obtenue à partir de l'unité d'imagerie SBUV (1), et ladite deuxième image visible, obtenue à partir de l'unité d'imagerie (2), traitant la lumière visible ou les IR, respectivement, et combinant, par superposition, ladite première image visuelle sur ladite deuxième image visible, d'une manière minimisant le déplacement d'image, de manière à produire une image visuelle combinée et superposée, représentant ledit objet, qui émet ou réfléchit ledit rayonnement UV à sa position à l'intérieur de la scène d'arrière-plan, de la scène, en lumière visible ou IR, respectivement, et sans aucun parallaxe imputable à ladite imagerie, via un axe commun et l'utilisation du diviseur de faisceau (4).

5. Appareil selon la revendication 4, dans lequel l'étage d'imagerie comprend deux éléments d'imagerie, un premier élément d'imagerie dans l'unité UV (1), pour produire la première image du champ de vision dans l'unité SBUV et un deuxième élément d'imagerie dans l'unité à lumière visible (2), pour produire une deuxième image du champ de vision dans l'unité à lumière visible (2), dans lequel, de préférence, les premier et deuxième éléments sont des lentilles optiques, dans lequel, de préférence, le filtre optique ultraviolet aveugle à la lumière solaire (11) est positionné avant la lentille optique (12) de l'unité SBUV, après la lentille optique (12) de l'unité UV, ou est incorporé à l'intérieur de la lentille optique (12) de l'unité SBUV.

6. Appareil selon la revendication 5, dans lequel l'étage d'imagerie comprend ledit diviseur de faisceau (4), recevant des rayons de lumière provenant du champ de vision, et divisant les rayons de lumière reçus de manière que les faisceaux (2a) couvrant au moins le spectre de la lumière visible soient dirigés vers l'unité à lumière visible (2), et que les faisceaux (1a) couvrant au moins le spectre SBUV soient dirigés vers l'unité SBUV (1), dans lequel, de préférence, le diviseur de faisceau (4) est un diviseur de faisceau dichroïque.

7. Appareil selon la revendication 4, dans lequel le capteur d'image (13), à l'unité SBUV, comprend en outre une première lentille (12) pour recevoir la rayonnement dans la plage spectrale aveugle à la lumière solaire, passant par le filtre optique ultraviolet aveugle à la lumière solaire (11), et pour produire une image UV à occultation solaire sur le plan image de la première lentille.

8. Appareil selon la revendication 4, dans lequel le capteur d'image (13) est un écran fluorescent ; ou
dans lequel le capteur d'image (13) est un intensificateur d'image aveugle à la lumière solaire ; ou
dans lequel le capteur d'image (13) est sélectionné parmi CCD, BCCD, EBCCD, ICCD, MCP-PMT ayant une anode multiple.

9. Appareil selon la revendication 5, dans lequel l'unité traitant l'image dans le spectre visible comprend un capteur d'image sélectionné parmi CCD, CMOS, CID, recevant l'image dans le spectre visible, et produisant des deuxièmes signaux électroniques, décrivant ladite image.

10. Appareil selon la revendication 4, dans lequel l'image visuelle combinée (244) est obtenue par mélange arithmétique, mélange non arithmétique, codage de luminance ou codage chromatique, combinaison desdits premier et deuxième signaux électroniques ; ou
comprenant en outre un visuel d'affichage (256), pour afficher l'image visuelle combinée ; ou
comprenant en outre un appareil photo ou un enregistreur électronique, pour enregistrer l'image visuelle combinée (244) ; ou
comprenant en outre des moyens optiques passifs (12) et un intensificateur d'image UV (13), pour permettre à un opérateur de l'appareil de visualiser l'image visuelle combinée.

11. Appareil selon la revendication 5, comprenant en outre une unité de traitement (260), pour traiter des signaux électroniques décrivant l'image UV, l'image dans le spectre visible ou IR, ou l'image combinée, pour améliorer le contraste entre l'image UV et l'image dans le spectre visible ou IR, ou pour l'élimination du bruit, l'identification d'émetteurs d'UV dans le champ de vision, ou la capture d'évènements UV transitoires dans le champ de vision.

12. Appareil selon la revendication 11, dans lequel l'unité de traitement (260) est une unité de traitement numérique ; ou
dans lequel l'unité de traitement (260) est une unité de traitement analogique ; ou
comprenant en outre des moyens pour fournir une alerte telle que le fait que la détection de rayonnement SBUV est supérieure à un niveau de seuil prédéfini ; ou
comprenant en outre des moyens pour initier une action telle que le fait que la détection de rayonnement SBUV soit supérieure à un niveau de seuil prédéfini.

13. Appareil selon la revendication 12, dans lequel l'action est l'initiation d'un extincteur de feu ; ou
dans lequel l'action est la documentation d'évènements d'émission d'UV dans le champ de vision.

14. Appareil selon la revendication 4, dans lequel la combinaison (3) de l'image visible de l'image UV, aveugle à la lumière solaire, du champ de vision et l'image produite par l'unité traitant la lumière visible ou les IR est accomplie optiquement, à l'aide d'un combineur de faisceau dichroïque observant simultanément lesdites images.

15. Appareil selon la revendication 14, réalisé sous forme monoculaire ou binoculaire.

16. Appareil selon la revendication 1, pour la détection, l'imagerie, la localisation et la visualisation d'un objet qui émet un rayonnement UV, dans lequel le rayonnement UV est provoqué par une décharge électrique.

17. Appareil selon la revendication 5, pour la détection, l'imagerie, la localisation et la visualisation d'un objet qui émet un rayonnement UV provoqué par une décharge électrique.

18. Appareil selon la revendication 1, pour la détection, l'imagerie, la localisation et la visualisation d'un objet qui émet un rayonnement UV provoqué par une combustion.

19. Appareil selon la revendication 1, pour la détection, la localisation et le pistage, tandis qu'ils sont en déplacement, d'objets munis d'une source de lumière émettant un rayonnement UV.

20. Appareil selon la revendication 1, pour l'imagerie et la surveillance d'un phénomène produisant une émission d'UV, dans lequel, de préférence, le phénomène est un rayonnement de Cherenkov, ou dans lequel, de préférence, le phénomène produit des émissions transitoires d'UV.

21. Appareil selon la revendication 1, pour l'imagerie visuelle des réflexions provenant d'objets illuminés par des sources de lumière UV, dans lequel, de préférence, les objets illuminés par les sources UV sont des empreintes digitales ou des taches de fluide.

22. Appareil selon la revendication 4, pour détecter un rayonnement UV provenant d'une combustion.

23. Appareil selon la revendication 4, pour la détection et la localisation et le pistage d'objets munis d'une source de lumière émettant un rayonnement UV.

24. Appareil selon la revendication 4, pour la détection, l'imagerie et la surveillance d'un phénomène produisant une émission d'UV, dans lequel, de préférence, le phénomène est un rayonnement de Cherenkov, ou dans lequel, de préférence, le phénomène produit des émissions transitoires d'UV.

25. Appareil selon la revendication 4, pour la détection et l'imagerie visuelle de réflexions provenant d'objets illuminés par des sources de lumière UV, dans lequel, de préférence, les objets illuminés par les sources UV sont des empreintes digitales ou des taches de fluide.
